# EUROPÄISCHE PATENTSCHRIFT

(11) **EP 3 482 713 B1**
(45) Veröffentlichungstag und Bekanntmachung des Hinweises auf die Patenterteilung: **19.08.2026**
(21) Anmeldenummer: 18211456.1
(22) Anmeldetag: 25.05.2004
(51) Int. Cl.: A61C 3/025

(54) **DÜSENSTÜCK FÜR EIN DENTALES PULVERSTRAHLGERÄT**
NOZZLE PIECE FOR A DENTAL POWDER JET DEVICE
PARTIE A BUSE POUR APPAREIL A JET DE POUDRE DENTAIRE

(30) Priorität: 11.07.2003 DE 10331583
(43) Veröffentlichungstag der Anmeldung: 15.05.2019
(62) Dokumentnummer(n) der früheren Anmeldung(en) nach Art. 76 EPÜ: 04734680.4 / 1 643 925
(73) Patentinhaber: Ferton Holding S.A., 2800 Delémont (CH)
(72) Erfinder: PICHAT, Patrick, 74100 Annemasse (FR); HENRY, Nicole, 1196 Glandad (CH); MEISSNER, Rolf, 1182 Gilly (CH); MENNE, Andreas, 8274 Tägerwilen (CH)
(74) Vertreter: Müller Schupfner & Partner Patent- und Rechtsanwaltspartnerschaft mbB (Muc)

(56) Entgegenhaltungen:
- JP-A- 2002 165 806

## Beschreibung

Die Erfindung bezieht sich auf ein Düsenstück für ein dentales Pulverstrahlgerät, das für eine auswechselbare Anordnung an einem Handstück vorgesehen ist und eine Austrittsdüse für Luft im Gemisch mit einem für eine Zahnreinigung geeigneten Dentalpulver aufweist, gemäß der durch den Oberbegriff des Patentanspruches 1 angegebenen Gattung.

Bei einem aus der US-PS 5 765 759 bekannten Düsenstück dieser Art ist der Auslassquerschnitt der Austrittsdüse mit einem offenen Ende eines relativ kurzen Röhrchens ausgebildet, das durch ein Schraubteil an dem Düsenstück festgelegt ist. Ein offenes Einlassende des Röhrchens ist mit einer in dem Düsenstück ausgebildeten Mischkammer verbunden. An die Mischkammer sind zwei in dem Düsenstück ausgebildete Anschlussbohrungen für die Zuleitung von Luft und für eine getrennte Zuleitung eines Luft-Pulver-Gemisches angeschlossen. Das Düsenstück weist eine drehbare Anordnung an dem ein integriertes Griffteil bildenden Kopfende eines Handstückes auf, womit das unter einem stumpfen Winkel zu der Drehachse des Düsenstückes ausgerichtete Röhrchen auf unterschiedliche Winkelausrichtungen seines Auslassquerschnittes relativ zu dem Handstück eingestellt werden kann. Das bekannte Düsenstück ermöglicht so eine supragingivale Pulverstrahlreinigung von Zahnflächen unter Berücksichtigung von individuellen Vorgaben bei einem Patienten.

Aus der DE 101 14 324 A1 ist ein Düsenstück bekannt, bei dem eine Austrittsdüse für ein Luft-Pulver-Gemisch von einer konzentrisch angeordneten äußeren Austrittsdüse für den Auslass eines Fluids umgeben ist. Die beiden Austrittsdüsen sind über Anschlussbohrungen an zwei getrennte Anschlussleitungen eines dabei separat ausgeführten und an dem Kopfende eines Handstückes festgelegten Griffteils angeschlossen. Mit einem Düsenstück dieser Ausbildung kann jede supragingivale Pulverstrahlreinigung mit einer gleichzeitigen Fluidbestrahlung der behandelte Zahnflächen unterstützt werden, um deren schonende Bearbeitung bei einer durchgeführten Zahnreinigung zu variieren.

Aus der JP 2002 165 806 ist eine Düsenelement bekannt, das austauschbar an einem Handgerät montiert ist. Das Düsenelement umfasst dabei ein Doppelrohr zur Führung von Pulver und Wasser.

Für eine mittels eines Pulverstrahlgerätes unter Verwendung solcher Düsenstücke durchgeführte Zahnreinigung werden herkömmlich Natriumbicarbonatpulver unterschiedlicher Körnung oder damit als Hauptbestandteil gebildete Pulvergemische verwendet. Diese Pulver ergeben eine abrasive Wirkung und damit auch eine Aufrauhung der behandelten supragingivalen Zahnflächen. Daneben besteht auch das Risiko für eine Verletzung der subgingivalen Zahnoberflächen insbesondere im Zahnhalsbereich. Es wird deshalb in jüngerer Zeit die Verwendung von eher sehr feinkörnigen Dentalpulvern mit geringeren Dichten als die für die Pulverstrahlreinigung von supragingivalen Oberflächen bisher verwendeten Abrasivpulver angestrebt.

Solche eher feinkörnigere Pulver und/oder Pulvergemische sind zur Verwendung bei der supragingivalen Zahnreinigung bsp. beschrieben in der DE 100 14 416 A1.

In dieser Druckschrift ist auf eine Dichte der Pulver von nicht mehr als 2.0 g/cm³ hingewiesen mit der ergänzenden Angabe, dass sich damit eine durch die Pulverbestrahlung mit den herkömmlichen Düsenstücken verursachte Abrasion der Zahnoberfläche von nicht mehr als 0.10 mm³ erreichen lassen soll, bezogen auf eine Zahnoberfläche von 9.6 mm² bei einer Bestrahlungsdauer von 2 Minuten mit einem Strahldruck von 4 bar und einem Abstand zwischen der Zahnoberfläche und der Mündung der Austrittsdüse für das Luft-Pulver-Gemisch von nicht mehr als 2.5 mm. Mit diesen Pulvern soll bei einer supragingivalen Pulverstrahlreinigung ein nennenswerter Verlust an nicht regenerierbarer Zahnhartsubstanz auch bei einer mehrmaligen Wiederholung der Bestrahlung zu verhindern sein. Auch sollen damit nicht nur übliche Verunreinigungen und Verfärbungen der sichtbaren Zahnhartsubstanz entfernt werden können, sondern auch nicht oder nur schlecht sichtbare Plaquereste, insbesondere Ablagerungen, die von Mikroorganismen herrühren. Eine Verwendung desselben Pulvers wurde daneben gemäß der DE 199 10 559 A1 auch zur Verwendung bei einer subgingivalen Pulverstrahlreinigung vorgeschlagen, wobei jedoch keine nennenswerte Differenzierung gegenüber einer supragingivalen Pulverstrahlreinigung erfolgt ist.

Bei einer Erprobung dieser eher feinkörnigen Dentalpulver unter Verwendung der bei der Pulverstrahlreinigung herkömmlich verwendeten Düsenstücke wurde jedoch gefunden, dass damit kaum weitgehend atraumatische Zahnbehandlungen möglich erscheinen. Ein besonderes Kriterium, das sich bei dieser Erprobung hauptsächlich ergeben hat, war daneben hauptsächlich eine fehlende Erreichbarkeit der Wurzeloberflächen für ein dabei erforderliches Arbeiten innerhalb der Zahnfleischtaschen. Die bisher konzipierten Düsenstücke haben sich dafür nicht oder nur wenig als geeignet erwiesen.

Der Erfindung liegt die Aufgabe zugrunde, ein neues Düsenstück der eingangs genannten Art bereitzustellen, welches für eine Verwendungsmöglichkeit von besonders feinkörnigeren Dentalpulvern bzw. Pulvergemischen mit geringeren Dichten als die bisher verwendeten Abrasivpulver geeignet ist und eine subgingivale, weitgehend atraumatische Pulverstrahlreinigung der Zahnwurzeloberflächen erlauben soll.

Diese Aufgabe wird bei einem Düsenstück mit den Merkmalen des Anspruchs 1 gelöst.

Bei dem erfindungsgemäßen Düsenstück wird primär durch die röhrchenförmige Ausbildung der zum Auslassquerschnitt der Austrittsdüse hin verlaufenden Teillänge des Düsenstückes ein weitgehend atraumatisches Einführen der Austrittsdüse in die Zahnfleischtaschen erhalten. Die Länge des Röhrchens kann dabei etwa 15 mm betragen, um auch bei den hinteren Zahnfleischtaschen ein einfaches Einführen des vorderen Endes des Röhrchens bis zu einer Tiefe von etwa 5 mm zu ermöglichen. Die in der Mantelfläche dieses vorderen Endes des Röhrchens ausgebildeten Düsenöffnungen ergeben dann bei diesem Einführen einen mehrfach unterteilten Pulverstrahl, der die Oberfläche der Zahnwurzeln problemlos auch dann erreichen lässt, wenn zu deren Reinigung die feinkörnigeren Pulver und/oder Pulvergemische einer relativ geringen Dichte wie vorerwähnt eingesetzt werden. Das erfindungsgemäße Düsenstück lässt daher eine entsprechend optimale subgingivale Pulverstrahlreinigung mit solchen feinkörnigeren Dentalpulvern erwarten.

Für diese subgingivale Pulverstrahlreinigung können verschiedene Geometrien der Austrittsdüse respektive auch Ausbildungen und Anordnungen der Düsenöffnungen in der Mantelfläche des vorderen Endes der röhrchenförmigen Teillänge des Düsenstückes in Frage kommen, um im Rahmen einer experimentellen Erprobung die subgingivale Pulverstrahlreinigung nach individuellen Gegebenheiten zu optimieren. Für diese angestrebte Optimierung kann das vordere axiale Ende des Röhrchens geschlossen ausgebildet sein, wobei dieses geschlossene Ende in Übereinstimmung mit einem weiteren Gestaltungsmerkmal des erfindungsgemäßen Düsenstückes alternativ auch mit einer zusätzlichen axialen Düsenöffnung versehen sein kann. Auch kann zweckmässig eine zweite Austrittsdüse für die Zuleitung eines Fluids vorgesehen sein, um bei der subgingivalen Zahnbehandlung mit solchen feinkörnigeren Dentalpulvern bzw. Pulvergemischen mit relativ geringen Dichten einen Spraynebel zu erzeugen, der während der Behandlung eine mögliche Staubbelastung verringern lässt.

Mehrere Ausführungsbeispiele von Düsenstücken, die sich als besonders vorteilhaft erweisen können und die auch mit den einzelnen Patentansprüchen angegeben sind, sind in der Zeichnung schematisch dargestellt und werden nachfolgend näher erläutert. Es zeigt :
- Fig. 1: eine stark schematisierte Darstellung des Kopfendes eines für ein Pulverstrahlgerät vorgesehenen bekannten Handstückes, für welches das mit der Einzelheit X angedeutete Düsenstück gemäß der Erfindung konzipiert sein kann,
- Fig. 2: eine vergrösserte Schnittdarstellung des in Fig. 1 mit der Einzelheit X gezeigten Düsenstückes ,
- Fig. 3: eine vergrösserte Schnittdarstellung der Einzelheit X gemäß einer alternativen Ausführungsform ,
- Fig. 4: eine gesammelte Darstellung von verschiedenen alternativen Ausbildungen der Austrittsdüse des Düsenstückes, teilweise mit einem noch weiter vergrösserten Längsschnitt und einem zugehörigen Querschnitt und teilweise mit entsprechenden Ansichten,
- Fig. 5: eine weitere gesammelte Darstellung von verschiedenen alternativen Ausbildungen einer axialen Düsenöffnung der Austrittsdüse des Düsenstückes,
- Fig. 6: vergrösserte Schnittdarstellungen der Einzelheit X gemäß weiteren alternativen Ausführungsformen , bei denen eine zusätzliche Fluid-Austrittsdüse vorgesehen ist,
- Fig. 7: eine Schemadarstellung einer als Positionsmarkierung für die Düsenöffnungen der Austrittsdüse vorgesehenen Skalierung in einer Seitenansicht und im Schnitt nach der Linie C-C, und
- Fig. 8: eine vergrösserte Schnittdarstellung der Einzelheit X gemäß einer weiteren alternativen Ausführungsform

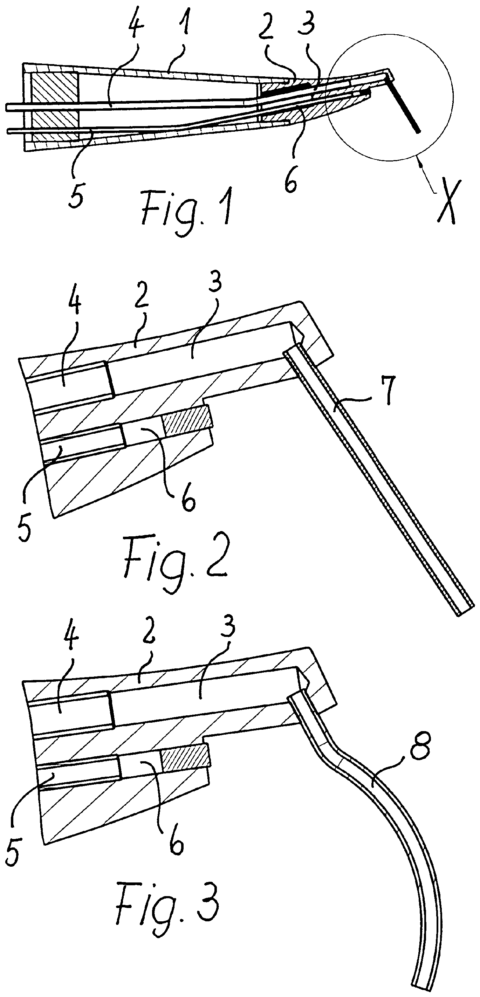

Das in Fig. 1 mit einer stark schematisierten Darstellung gezeigte Kopfende eines Handstückes soll eine Ausbildung gemäß der DE 101 14 324 A1 verdeutlichen. Es wird dafür eine Anschlussverbindung eines mit einer Griffhülse 1 auswechselbar verbundenen Düsenstückes 2 als bekannt vorausgesetzt. Das Düsenstück 2 ist Träger einer durch die Einzelheit X bezeichneten Austrittsdüse für Luft im Gemisch mit einem für eine Zahnreinigung geeigneten Dentalpulver. Die Austrittsdüse ist über eine in dem Düsenstück 2 ausgebildete Anschlussbohrung 3 mit einer durch die Griffhülse hindurchgeführten Anschlussleitung 4 verbunden, über welche das Luft-Pulver-Gemisch aus einer angeschlossenen Versorgungsquelle für die Bereitstellung eines Arbeitsstrahles an dem Auslass der Austrittsdüse zugeleitet wird. Bei dem bekannten Handstück ist daneben noch eine zweite Anschlussleitung 5 vorgesehen, die über eine zweite Anschlussbohrung 6 des Düsenstückes 2 an eine Fluid-Austrittsdüse angeschlossen ist, welche zu der Austrittsdüse für das

Luft-Pulver-Gemisch konzentrisch angeordnet ist und einen mit dessen Arbeitsstrahl gemeinsamen Fluidstrahl ergibt, der damit ebenfalls bei einer entsprechenden Führung des Handstückes gegen das maßgebliche Präparationsfeld eines Zahnes ausgerichtet ist.

Für die Darstellung der Fig. 1 ist berücksichtigt, dass die Anschlussleitung 5 in der zugeordneten Anschlussbohrung 6 des Düsenstückes 2 blind endet und daher nur die Anschlussleitung 4 über deren zugeordnete Anschlussbohrung 3 des Düsenstückes 2 einen Anschluss an die zugeordnete Austrittsdüse hat. Die Fig. 2 zeigt mit einer vergrößerten Schnittdarstellung diese Anschlussverhältnisse bei einem Düsenstück . Die Austrittsdüse gemäß der Einzelheit X in Fig. 1 ist mit einem relativ dünnwandigen und jedenfalls einen kleineren Durchmesser als die Anschlussbohrung 3 aufweisenden Röhrchen 7 ausgebildet. Dieses Röhrchen 7 ist unter einem stumpfen Winkel zu der axialen Hauptachse des Handstückes ausgerichtet und ist an dem Düsenstück 2 für eine vorstehende Anordnung von bsp. 15 mm festgelegt, um mit dem vorderen Ende des Röhrchens über eine Teillänge von etwa 5 mm eine Arbeitslänge für die Austrittsdüse zu erhalten. Bei einer mit der Erfindung vorrangig angedachten subgingivalen Pulverstrahlreinigung wird auf diese Weise ein weitgehend atraumatisches Einführen dieses Röhrchens in die Zahnfleischtaschen ermöglicht.

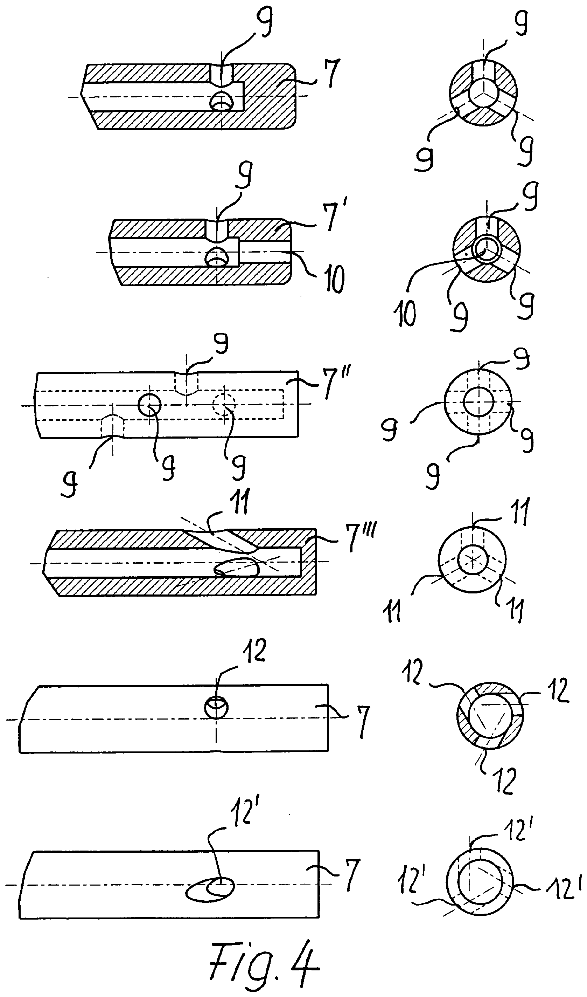

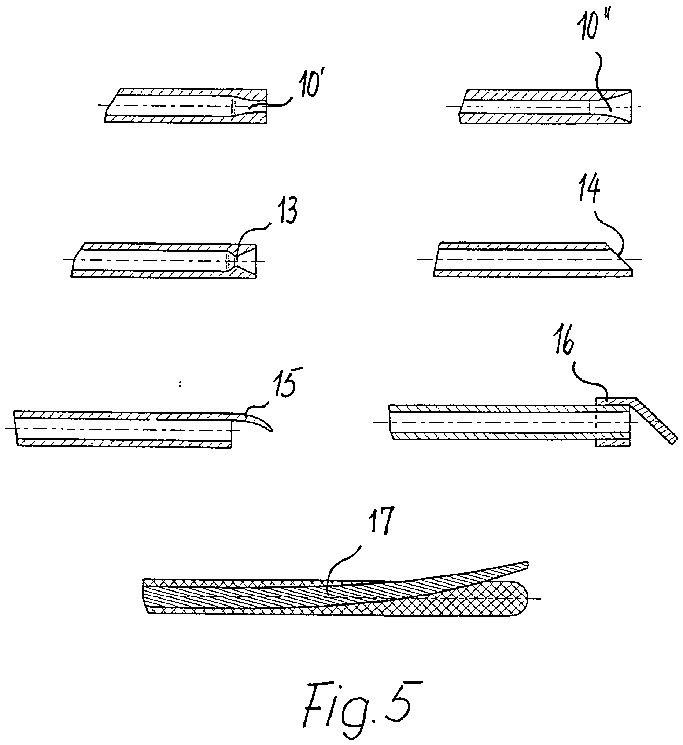

In Fig. 3 ist für eine Gegenüberstellung mit der Fig. 2 eine alternative Ausführungsform der Austrittsdüse bei dem Düsenstück gemäß der Einzelheit X gezeigt. Die Austrittsdüse ist auch hier mit einem vergleichbar dünnwandigen Röhrchen 8 ausgebildet, das an dem Düsenstück 2 mit einem Anschluss an die Anschlussbohrung 3 festgelegt ist und mithin eine entsprechende röhrchenförmige Teillänge am vorderen Ende des Auslassquerschnittes der Austrittsdüse bildet. Das Röhrchen 8 ist bei dieser alternativen Ausführungsform mit einem bogenförmigen Verlauf versehen, der hauptsächlich unter dem Gesichtpunkt gestaltet ist, damit für das Röhrchen eine engere Anlagefläche an die Zähne während der subgingivalen Zahnbehandlung zu erhalten. Dieser bogenförmige Verlauf kann bsp. auch eine etwa ruderblattförmige Ausbildung erfahren, wie sie von manchen zahnmedizinischen Geräten her für eine Reinigung von Zahnzwischenräumen bekannt ist. Es soll deshalb hier darauf hingewiesen sein, dass zwar die geradlinige Ausbildung des Röhrchens gemäß der Darstellung in Fig. 2 eine generell bevorzugte Ausführungsform für das erfindungsgemäße Düsenstück ergibt, dass aber diese geradlinige Ausbildung auch vielfache Varianten erfahren kann. Die bevorzugt als Einmalprodukte auswechselbar an dem Düsenstück 2 angeordneten Röhrchen 7 bzw. 8 können entweder einen kreisförmigen Querschnitt oder auch einen ovalen bis elliptischen Querschnitt haben. Ein ovaler bis elliptischer Querschnitt der Röhrchen lässt eine weniger weite Öffnung der Zahnfleischtaschen erwarten. Mit diesen Röhrchen 7 bzw. 8 wird die maßgebliche Austrittsdüse des Düsenstückes für ein Luft-Pulver-Gemisch erhalten, wobei ihr vorderes Ende entweder geschlossen ist oder eine axiale Düsenöffnung aufweisen kann, wie es nachfolgend für verschiedene Alternativen über die gesammelten Darstellungen der Figuren 4 und 5 näher erläutert wird.

Die gesammelte Darstellung der Fig. 4 zeigt mit einem weiter vergrösserten Massstab in der Reihenfolge von oben nach unten verschiedene Ausbildungen des Auslassquerschnittes der mit den Röhrchen 7 bzw. 8 gebildeten Austrittsdüse. Allen diesen Ausbildungen ist das Merkmal gemeinsam, dass dieser Auslassquerschnitt mit wenigen Düsenöffnungen in der Mantelfläche des am vorderen, axial geschlossenen oder mit einer axialen Düsenöffnung versehenen Endes des Röhrchens ausgebildet sind.

Gemäß einer ersten Ausführungsform der Austrittsdüse in der Ausbildung eines mit einem geschlossenen Ende ausgebildeten Röhrchens 7 ist der Auslassquerschnitt dieser Austrittsdüse mit drei in einer gemeinsamen Radialebene des Röhrchens angeordneten Radialbohrungen 9 ausgebildet, die längs der zugeordneten Umfangslinie des Röhrchens einen gleichen gegenseitigen Abstand voneinander aufweisen. Der mit diesen Radialbohrungen definierte Auslassquerschnitt der Austrittsdüse kann alternativ mit einer in dem geschlossenen Ende des Röhrchens ausgebildeten weiteren Düsenöffnung erweitert sein. Mit der nächsten Darstellung in Fig. 4 ist daher für ein Röhrchen 7'noch eine axiale Düsenöffnung 10 gezeigt, die gemeinsam mit den Radialbohrungen 9 über den axialen Hohlraum des Röhrchens an die Anschlussbohrung 3 des Düsenstückes 2 und weiter an die Anschlussleitung 4 angeschlossen ist. Anstelle einer Anordnung der Radialbohrung 9 in nur einer gemeinsamen Radialebene kann auch eine Mehrfachanordnung der Radialbohrungen in mehreren Radialebenen vorgesehen werden. Die Radialbohrungen in den wechselseitig benachbarten Radialebenen sollten dabei in der axialen Richtung des Röhrchens auf Lücke zueinander versetzt sein, wie es für das hier wieder mit einem geschlossenen Ende ausgeführte Röhrchen 7"gezeigt ist. Bei dieser Ausführungsform ergibt sich für den Auslassquerschnitt der Austrittsdüse eine Art siebförmige Ausbildung, bei welcher die Aufteilung der einzelnen Düsenöffnungen in den verschiedenen Radialebenen des Röhrchens auch unterschiedlich vorgenommen sein kann.

Die den Auslassquerschnitt der Austrittsdüse bildenden Düsenöffnungen können alternativ auch als Schrägbohrungen 11 ausgeführt sein, wie es für das Röhrchen 7‴der nächsten Darstellung in Fig. 4 gezeigt ist. Diese Schrägbohrungen 11 schliessen mit der Achse des Röhrchens 7‴eine spitzen Winkel ein, dessen Ausrichtung dabei so zu verstehen ist, dass der massgebliche Auslassquerschnitt jeder Schrägbohrung dabei stromabwärts von dem jeweils zugeordneten Einlassquerschnitt ausgebildet ist. Während die Auslassquerschnitte in der Mantelfläche des Röhrchens 7‴liegen, befinden sich ihre Einlassquerschnitte in der den Hohlraum des Röhrchens umgebenden Wand, sodass dort wie bei den Radialbohrungen 9 eine offene Verbindung mit der Anschlussbohrung 3 des Düsenstückes 2 und weiter mit der Anschlussleitung 4 besteht, über weiche das Luft-Pulver-Gemisch dem Röhrchen zugeleitet wird.

Für eine weitere alternative Ausführungsform können die den Auslassquerschnitt der Austrittsdüse bildenden Düsenöffnungen auch als tangentiale bzw. windschief ausgerichtete Bohrungen 12 ausgeführt sein, deren Achsen entweder in einer gemeinsamen Radialebene des Röhrchens verlaufen oder, wie es für die ebenfalls tangentialen oder windschief ausgerichteten Bohrungen 12'gezeigt ist, unter einem spitzen Winkel zu der Axialebene des Röhrchens ausgerichtet sind. Der Hinweis auf eine tangentiale bzw. windschiefe Ausrichtung der Bohrungen 12 und 12', mit denen die Erzeugung einer Wirbelbildung innerhalb der Zahnfleischtaschen begünstigt werden soll, ist dabei so zu verstehen, dass mit den Achsen der Bohrungen ein virtueller Innenkreis des Röhrchens angedacht wird, bezüglich welchem für die Achsen dieser Bohrungen ein tangentialer Verlauf erhalten wird.

Für die Sammeldarstellung der Fig. 5 sind verschiedene alternative Ausbildungen für die axiale Düsenöffnung 10 gezeigt, die dabei nicht nur mit den Radialbohrungen 9, sondern auch mit den Schrägbohrungen 11 und/oder auch mit den tangentialen bzw. windschief ausgerichteten Bohrungen 12,12'kombiniert werden kann. In der Reihenfolge von oben nach unten ist in der Fig. 5 eine axiale Düsenöffnung 10'gezeigt, die mit einem sich in axialer Richtung verengenden Auslassquerschnitt versehen ist. Der Auslassquerschnitt kann sich auch diffusorförmig erweitern, wie es für die axiale Düsenöffnung 10"gezeigt ist. Auch kann die axiale Düsenöffnung nach Art einer Venturidüse 13 ausgebildet sein, und sie kann neben einer rechtwinklig zu der Achse des Röhrchens verlaufenden Austrittsfläche auch mit einer Schrägfläche 14 am Auslassende dieser axialen Austrittsdüse versehen sein. Um für den Luft-Pulver-Arbeitsstrahl eine gezielte Hinlenkung zu der behandelten Oberfläche einer Zahnwurzel zu erhalten, ist erfindungsgemäß an der axialen Düsenöffnung auch noch ein Ablenkkörper 16 vorgesehen, der eine auswechselbare Anordnung unter Verwendung einer Manschette erfährt, die dabei erfindungsgemäß auf das Ende des Röhrchens aufgeschoben wird. Die funktionelle Bedeutung eines solchen Ablenkkörpers kann auch mit wenigstens einer asymmetrisch derart ausgebildeten Düsenöffnung 17 erhalten werden, dass das zu dieser Düsenöffnung hin zugeleitete Luft-Pulver-Gemisch eine Ablenkung aus der Achse heraus erfährt.

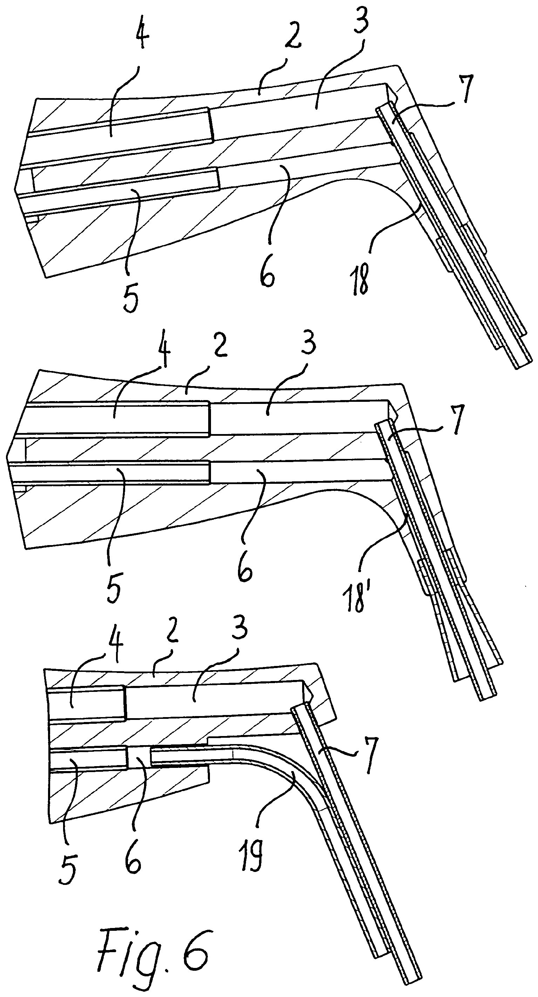

Mit der Fig. 6 sind verschiedene Möglichkeiten gezeigt, wie für weitere alternative Ausführungsformen des erfindungsgemäßen Düsenstückes neben der Austrittsdüse für das Luft-Pulver-Gemisch auch noch eine Fluid-Austrittsdüse integriert werden kann. Diese weiteren Ausführungsformen sind dabei übereinstimmend so zu verstehen, dass hier die Anschlussbohrung 6 des Düsenstückes 2 nicht mehr blind endet, sondern vielmehr wie bei dem bekannten Düsenstück mit einer solchen zusätzlich vorgesehenen Fluid-Austrittsdüse verbunden ist. Die obere Darstellung in Fig. 6 ergibt somit im Wesentlichen eine Übereinstimmung mit den bekannten Düsenstück gemäß der DE 101 14 324 A1 und ergibt mit seiner Anschlussbohrung 3 eine Verbindung mit der Austrittsdüse für das Luft-Pulver-Gemisch, die aber hier mit einem Röhrchen 7 der vorbeschriebenen erfindungsgemäßen Ausbildung bereitgestellt ist. Die Anschlussbohrung 6 des Düsenstückes 2 ist andererseits an eine Fluid-Austrittsdüse 18 angeschlossen, die konzentrisch zu dem Röhrchen 7 angeordnet ist. Die Mündung dieser Fluid-Austrittsdüse 18 ist dabei zu den Düsenöffnungen der Austrittsdüse für das Luft-Pulver-Gemisch axial zurückversetzt. Gemäß der mittleren Darstellung in Fig. 6 kann die Fluid-Austrittsdüse 18'auch mit einer sich diffusorförmig vergrößernden Mündung versehen sein. Gemäß der unteren Darstellung kann auch daran gedacht werden, diese zusätzliche Fluid-Austrittsdüse mit einem Röhrchen 19 auszubilden, das eine Anordnung an der Außenseite des Röhrchens 7 erfährt und dabei in die Anschlussbohrung 6 des Düsenstückes 2 eingesteckt wird.

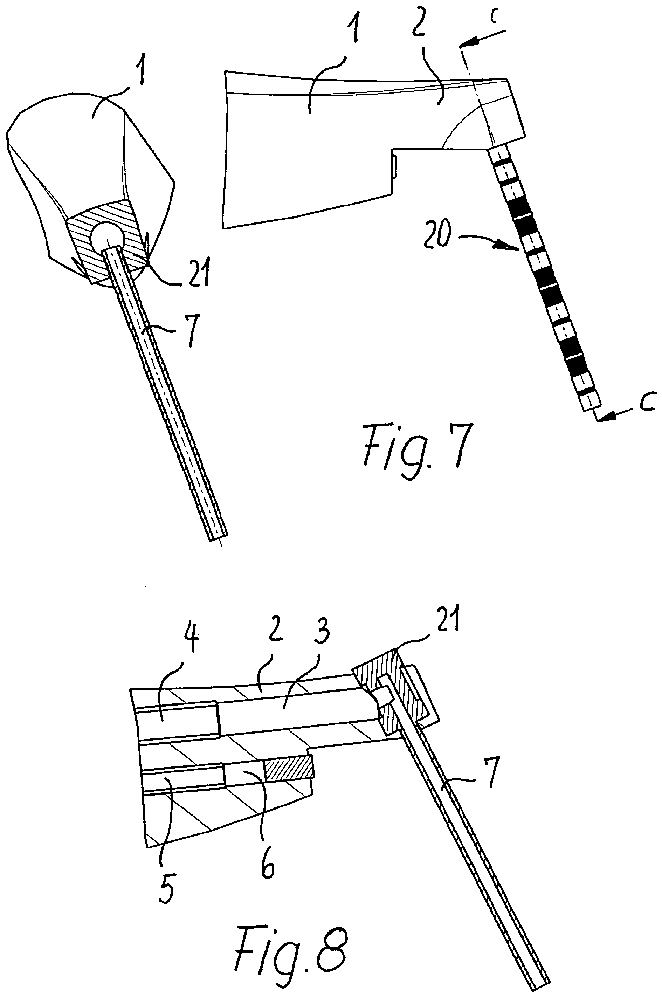

Mit der Fig. 7 ist schließlich noch veranschaulicht, dass an der generell röhrchenförmigen Teillänge des Düsenstückes eine Skalierung 20 und/oder eine Farbeinteilung angebracht sein kann, um eine bestimmte Position der den Auslassquerschnitt der Austrittsdüse für das Luft-Pulver-Gemisch bildenden Düsenöffnungen zu markieren. Mit der Schnittdarstellung ist dabei in Verbindung auch mit der Darstellung in Fig. 8 noch gezeigt, dass für eine auswechselbare Halterung des Röhrchens 7 ein Haltestück 21 vorgesehen sein kann, das in Bezug auf das Düsenstück 2 eine drehbare Anordnung für das Röhrchen ergibt und damit die Möglichkeit für eine wechselnde Positionierung der einzelnen Düsenöffnungen.

Das erfindungsgemäße Düsenstück ist vorrangig für eine subgingivale Pulverstrahlreinigung unter Verwendung eines relativ feinkörnigen Dentalpulvers konzipiert. Es kann jedoch bei einer Verwendung eines ebenso eher feinkörnigen Pulvers auch für eine supragingivale Pulverstrahlreinigung vorgesehen werden. Dabei sollten jedoch Düsenstücke mit einer angepassten, etwas abweichenden Orientierung der Düsenöffnungen verwendet werden, mit welchen der Auslassquerschnitt der Austrittsdüse in der Manteltasche des Röhrchens ausgebildet ist. Die deshalb auch bevorzugte Konzipierung der Röhrchen als auswechselbare Einmalprodukte vereinfacht dafür das Überwechseln zwischen diesen beiden Behandlungsarten der Pulverstrahlreinigung.

## Patentansprüche

1. Düsenstück eines dentalen Pulverstrahlgerätes zum Zahnreinigen in Zahntaschen, das für eine auswechselbare Anordnung an einem Handstück vorgesehen ist und eine Austrittsdüse zum Einführen in die Zahntasche für Luft im Gemisch mit einem für eine Zahnreinigung geeigneten Dentalpulver aufweist, und
welches eine zweite Austrittsdüse (18, 18') für die Zuleitung eines Fluids aufweist,
wobei eine vordere Teillänge am Auslassquerschnitt der Austrittsdüse über ein an dem Handstück festgelegtes Griffteil (1) des Düsenstückes nach außen vorsteht und röhrchenförmig ausgebildet ist, und
wobei der Auslassquerschnitt der Austrittsdüse mit wenigen Düsenöffnungen (9,11, 12', 17) in der Mantelfläche das vorderen Endes der als Röhrchen (7, 8) ausgebildeten, röhrchenförmigen Teillänge des Düsenstücks ausgebildet ist,
**dadurch gekennzeichnet,**
**dass** eine axiale Düsenöffnung der ersten Austrittsdüse einen Ablenkkörper (16) aufweist, der unter Verwendung einer Manschette auf das Ende des Röhrchens (7, 8) aufgeschoben ist.

2. Düsenstück nach einem der Ansprüche 1,
**dadurch gekennzeichnet,**
**dass** die Düsenöffnungen (9) als Radialbohrungen ausgeführt sind.

3. Düsenstück nach einem der Ansprüche 1 oder 2,
**dadurch gekennzeichnet,**
**dass** die Düsenöffnungen (11) als Schrägbohrungen ausgebildet sind, die mit der Achse des Röhrchens (7‴) einen spitzen Winkel einschließen.

4. Düsenstück nach einem der Ansprüche 1 bis 3,
**dadurch gekennzeichnet,**
**dass** die Düsenöffnungen (12, 12') als tangentiale bzw. windschief ausgerichtete Bohrungen ausgeführt sind.

5. Düsenstück nach Anspruch 4,
**dadurch gekennzeichnet,**
**dass** die Achsen der tangentialen bzw. windschiefen Bohrungen (12') unter einem spitzen Winkel zu der Axialebene des Röhrchens (7) ausgerichtet sind.

6. Düsenstück nach einem der vorhergehenden Ansprüche,
**dadurch gekennzeichnet,**
**dass** die Auslassquerschnitte der Schrägbohrungen (11) und/oder der tangentialen bzw. windschiefen Bohrungen (12, 12') stromabwärts zu dem jeweils zugeordneten Einlassquerschnitt der Bohrungen ausgebildet sind.

7. Düsenstück nach Anspruch 6,
**dadurch gekennzeichnet,**
**dass** die Achsen der tangentialen bzw. windschiefen Bohrungen (12, 12') in einer gemeinsamen Radialebene des Röhrchens (7) verlaufen.

8. Düsenstück nach einem der vorhergehenden Ansprüche,
**dadurch gekennzeichnet,**
**dass** die Düsenöffnungen (17) schlitzförmig ausgebildet sind.

9. Düsenstück nach Anspruch 8,
**dadurch gekennzeichnet,**
**dass** eine definierte Längsachse der schlitzförmigen Düsenöffnungen (17) achsparallel oder unter einem Winkel zu einer achsparallelen Mantelfläche des Röhrchens ausgerichtet ist.

10. Düsenstück nach einem der vorhergehenden Ansprüche,
**dadurch gekennzeichnet,**
**dass** in der oder jeder Radialebene des Röhrchens (7, 7', 7", 7‴) wenigstens drei Düsenöffnungen (9, 11, 12, 12') längs der zugeordneten Umfangslinie des Röhrchens ausgebildet sind.

11. Düsenstück, nach einem der vorhergehenden Ansprüche,
**dadurch gekennzeichnet,**
**dass** die Mündung der Fluid-Austrittsdüse (18) zu den Düsenöffnungen (9, 11, 12, 12') der Austrittsdüse axial zurückversetzt und/oder konzentrisch zu der Austrittsdüse für das Luft-Pulver-Gemisch angeordnet ist.

12. Düsenstück nach einem der vorhergehenden Ansprüche,
**dadurch gekennzeichnet,**
**dass** die Fluid-Austrittsdüse (18') mit einem diffusorförmigen Auslassquerschnitt versehen ist.

13. Düsenstück nach einem der vorhergehenden Ansprüche,
**dadurch gekennzeichnet,**
**dass** die röhrchenförmige Teillänge (8) des Düsenstückes (2) mit einem bogenförmigen Verlauf versehen ist, der an den Düsenöffnungen (9, 11, 12, 12') der Austrittsdüse endet.

14. Düsenstück nach einem der vorhergehenden Ansprüche,
**dadurch gekennzeichnet,**
**dass** die Rörchen (7, 7", 7"', 8) des Düsenstückes (2) aus einem sich nach seiner Härte und Oberflächenbeschaffenheit atraumatisch verhaltenden Kunststoff besteht.

15. Düsenstück nach einem der vorhergehenden Ansprüche,
**dadurch gekennzeichnet,**
**dass** das Röhrchen (7, 7", 7"', 8) des Düsenstückes (2) eine Skalierung (20) und/oder eine Farbeinteilung für eine Markierung der Position der Düsenöffnungen relativ zu der Hauptachse des Handstückes aufweist.

16. Düsenstück nach einem der vorhergehenden Ansprüche,
**dadurch gekennzeichnet,**
**dass** das Röhrchen (7) als ein an dem Griffteil (1) auswechselbar angeordnetes Einmalprodukt ausgebildet ist.

## Claims

1. A nozzle piece for a dental powder jet device used for teeth cleaning in periodontal pockets, which is designed for an interchangeable arrangement at a handpiece and comprises an outlet nozzle for insertion into the periodontal pocket for air mixed with a dental powder suitable for a tooth cleaning, and
which comprises a second outlet nozzle (18, 18') for the supplying of a fluid, wherein a front partial length at the outlet cross-section of the outlet nozzle protrudes outward via a grip portion (1) of the nozzle piece fixed to the handpiece and is designed to be tubular, and
wherein the outlet cross-section of the outlet nozzle is designed with a few nozzle openings (9, 11, 12', 17) in the lateral surface of the front end of the as tube (7, 8) designed, tubular partial length of the nozzle piece,
**characterized in that**
an axial nozzle opening of the first outlet nozzle is designed to comprise a deflector (16) that is slid onto the end of the tube (7, 8) using a sleeve.

2. The nozzle piece according to one of claims 1,
**characterized in that**
the nozzle openings (9) are designed as radial bores.

3. The nozzle piece according to one of claims 1 or 2,
**characterized in that**
the nozzle openings (11) are designed as angled bores that form an acute angle with the axis of the tube (7‴).

4. The nozzle piece according to one of claims 1 through 3,
**characterized in that**
the nozzle openings (12, 12') are designed as tangential or skew oriented bores.

5. The nozzle piece according to claim 4,
**characterized in that**
the axes of the tangential or skew bores (12') are oriented at an acute angle to the axial plane of the tube (7).

6. The nozzle piece according to one of the preceding claims,
**characterized in that**
the outlet cross-sections of the oblique bores (11) and/or the tangential or skew bores (12, 12') are designed downstream of the respective associated inlet cross-section of the bores.

7. The nozzle piece according to claim 6,
**characterized in that**
the axes of the tangential or skew bores (12, 12') lie in a common radial plane of the tube (7).

8. The nozzle piece according to one of the preceding claims,
**characterized in that**
the nozzle openings (17) are designed to be slotted.

9. The nozzle piece according to claim 8,
**characterized in that**
a defined longitudinal axis of the slotted nozzle openings (17) is aligned either parallel to the axis or at an angle to an axis-parallel lateral surface of the tube.

10. The nozzle piece according to one of the preceding claims,
**characterized in that**
in the or each radial plane of the tube (7, 7', 7", 7"') at least three nozzle openings (9, 11, 12, 12') are designed along the associated circumferential line of the tube.

11. The nozzle piece, according to one of the preceding claims,
**characterized in that**
the mouth of the fluid outlet nozzle (18) is axially set back relative to the nozzle openings (9, 11, 12, 12') of the outlet nozzle and/or is arranged concentrically with respect to said outlet nozzle for the air-powder mixture.

12. The nozzle piece according to one of the preceding claims,
**characterized in that**
the fluid outlet nozzle (18') is provided with a diffuser-shaped outlet cross-section.

13. The nozzle piece according to one of the preceding claims,
**characterized in that**
the tubular partial length (8) of the nozzle piece (2) has an arcuate contour that ends at the nozzle openings (9, 11, 12, 12') of the outlet nozzle.

14. The nozzle piece according to one of the preceding claims,
**characterized in that**
the tubes (7, 7", 7"', 8) of the nozzle piece (2) are made of a plastic that is atrau-matic in terms of its hardness and surface texture.

15. The nozzle piece according to one of the preceding claims,
**characterized in that**
the tube (7, 7", 7"', 8) of the nozzle piece (2) comprises a scale (20) and/or color coding for marking the position of the nozzle openings relative to the main axis of the handpiece.

16. The nozzle piece according to one of the preceding claims,
**characterized in that**
the tube (7) is designed as a disposable product that is interchangeably mounted at the grip portion (1).

## Revendications

1. Élément de buse d'un appareil dentaire à jet de poudre pour le nettoyage dentaire dans des poches gingivales, qui est prévu pour une disposition interchangeable sur une pièce à main et qui présente une buse de sortie, destinée à être introduite dans la poche gingivale, pour de l'air en mélange avec une poudre dentale appropriée pour un nettoyage dentaire, et qui présente une seconde buse de sortie (18, 18') pour l'amenée d'un fluide,
dans lequel
une longueur partielle avant au niveau de la section transversale de sortie de la buse de sortie dépasse vers l'extérieur au-delà d'une partie formant poignée (1) de l'élément de buse immobilisée sur la pièce à main et est réalisée en forme tubulaire, et
la section transversale de sortie de la buse de sortie est réalisée avec quelques ouvertures de buse (9, 11, 12', 17) dans la surface enveloppe de l'extrémité avant de la longueur partielle de l'élément de buse, longueur qui est en forme tubulaire et réalisée sous forme de tube (7, 8),
**caractérisé en ce que**
une ouverture axiale de la première buse de sortie comprend un corps de déflexion (16) qui est emboîté sur l'extrémité du tube (7, 8) à l'aide d'un manchon.

2. Élément de buse selon la revendication 1,
**caractérisé en ce que**
les ouvertures de buse (9) sont réalisées sous forme de perçages radiaux.

3. Élément de buse selon l'une des revendications 1 ou 2,
**caractérisé en ce que**
les ouvertures de buse (11) sont réalisées sous forme de perçages inclinés qui définissent un angle aigu avec l'axe du tube (7‴).

4. Élément de buse selon l'une des revendications 1 à 3,
**caractérisé en ce que**
les ouvertures de buse (12, 12') sont réalisées sous forme de perçages tangentiels ou orientés en oblique.

5. Élément de buse selon la revendication 4,
**caractérisé en ce que**
les axes des perçages tangentiels ou obliques (12') sont orientés sous un angle aigu par rapport au plan axial du tube (7).

6. Élément de buse selon l'une des revendications précédentes,
**caractérisé en ce que**
les sections transversales de sortie des perçages inclinés (11) et/ou des perçages tangentiels ou obliques (12, 12') sont réalisés en aval par rapport à la section transversale d'entrée associée respective des perçages.

7. Élément de buse selon la revendication 6,
**caractérisé en ce que**
les axes des perçages tangentiels ou obliques (12, 12') s'étendent dans un plan radial commun du tube (7).

8. Élément de buse selon l'une des revendications précédentes,
**caractérisé en ce que**
les ouvertures de buse (17) sont réalisées sous forme de fentes.

9. Élément de buse selon la revendication 8,
**caractérisé en ce que**
un axe longitudinal défini des ouvertures de buse (17) en forme de fentes est orienté parallèlement à l'axe ou sous un angle par rapport à une surface enveloppe parallèle à l'axe du tube.

10. Élément de buse selon l'une des revendications précédentes,
**caractérisé en ce que**
dans le ou dans chaque plan radial du tube (7, 7', 7", 7"'), au moins trois ouvertures de buse (9, 11, 12, 12') sont réalisées le long de la ligne périphérique associée du tube.

11. Élément de buse selon l'une des revendications précédentes,
**caractérisé en ce que**
l'embouchure de la buse de sortie de fluide (18) est axialement en retrait par rapport aux ouvertures de buse (9, 11, 12, 12') de la buse de sortie et/ou est agencée concentriquement à la buse de sortie pour le mélange air-poudre.

12. Élément de buse selon l'une des revendications précédentes,
**caractérisé en ce que**
la buse de sortie de fluide (18') est pourvue d'une section transversale de sortie en forme de diffuseur.

13. Élément de buse selon l'une des revendications précédentes,
**caractérisé en ce que**
la longueur partielle (8) en forme de tube de l'élément de buse (2) est pourvue d'un profil arqué qui se termine aux ouvertures de buse (9, 11, 12, 12') de la buse de sortie.

14. Élément de buse selon l'une des revendications précédentes,
**caractérisé en ce que**
les tubes (7, 7", 7‴, 8) de l'élément de buse (2) sont constitués en une matière plastique à comportement atraumatique quant à sa dureté et à la nature de sa surface.

15. Élément de buse selon l'une des revendications précédentes,
**caractérisé en ce que**
le tube (7, 7", 7"', 8) de l'élément de buse (2) présente une graduation (20) et/ou un codage de couleur pour un marquage de la position des ouvertures de buse par rapport à l'axe principal de la pièce à main.

16. Élément de buse selon l'une des revendications précédentes,
**caractérisé en ce que**
le tube (7) est réalisé sous la forme d'un produit à usage unique agencé de façon interchangeable sur la partie formant poignée (1).
